# EUROPEAN PATENT SPECIFICATION

(11) **EP 0 508 693 B1**
(45) Date of publication and mention of the grant of the patent: **01.07.1998**
(21) Application number: 92302978.9
(22) Date of filing: 03.04.1992
(51) Int. Cl.: G06K 15/00

(54) **Image forming apparatus**
Bildererzeugungsgerät
Appareil de génération d'image

(30) Priority: 08.04.1991 JP 103139/91
(43) Date of publication of application: 14.10.1992
(73) Proprietor: KABUSHIKI KAISHA TOSHIBA, Kawasaki-shi (JP); Kabushiki Kaisha TEC, Tagata-gun, Shizuoka 410-23 (JP)
(72) Inventor: Suzuki, Kazuhisa, c/o Intellectual Property Div., Minato-ku, Tokyo (JP)
(74) Representative: Shindler, Nigel

(56) References cited:
- EP-A- 96 407
- US-A- 4 968 159
- PATENT ABSTRACTS OF JAPAN vol. 14, no. 516 (P-1130) 13 November 1990 & JP-A-22 16 521
- PATENT ABSTRACTS OF JAPAN vol. 13, no. 193 (M-822) 9 May 1989 & JP-A-10 18 640

## Description

This invention relates to an image forming apparatus, such as a laser printer, for forming an image on an image bearing member according to data supplied from an output device and, more particularly, to an image forming apparatus compatible with other kinds of the image forming apparatuses.

Recently, image forming apparatus for forming images on an image bearing member including laser printer systems have become very popular. For example, United States Patent No. 4,681,425 discloses one type of laser printer design. The laser printer serves as an output device for a host computer unit. Also, the laser printer includes a buffer memory for temporarily storing image data supplied from the host unit. In response to printer command from the host unit, the laser printer performs an image forming operation to form an image on an image bearing member according to image data stored in the buffer memory.

Also, in addition to image data supplied from the host unit, this laser printer receives a printer control language which is adapted for operating the laser printer. For example, the printer control language represents such things as where to draw a box or a circle, when to start print and so on. However, different kinds of the laser printers have their own printer control language. Thus, in order to make the laser printer compatible with other laser printers, the laser printer incorporates its own native printer control language and also has the ability to emulate, or function like, other laser printers (see for example EP-A-00 96 407, as set forth in the preamble of claim 1). Thus, this laser printer may emulate the printing operation of other kinds of laser printers by selecting the appropriate printer emulation. When image data for the emulated printer is subsequently received, it is translated by the emulation circuitry into the equivalent "native mode" data.

In conventional laser printers, however, when an operator changes the printer emulation so as to enable another printer while image data supplied from the host unit is still stored in the buffer memory, the printer emulation is changed and the stored image data is always erased from the buffer memory or held in the buffer memory. Thus, when the operator wants to print the erased image data after the printer emulation is changed, it is necessary to supply the same image data from the host unit to the laser printer again. Therefore, in the conventional laser printer, it is very troublesome to print the image data stored in the buffer memory before the alternation of the emulation when the printer emulation is changed.

Accordingly, it is an object of the present invention to provide an image forming apparatus capable of printing image data stored in a memory of the image forming apparatus efficiently when a printer emulation is changed.

Accordingly, the foregoing objectives, as well as others, are achieved by the present invention, which provides a printing apparatus having an image bearing member and connected to a host unit for printing an image on the image bearing member according to image data supplied from the host unit, the printing apparatus having selectable printer emulation to thereby emulate other printers, the printing apparatus comprising:
buffer memory means for temporarily storing the image data supplied from the host unit; and
first key means for selecting an alternative printer emulation;
characterised in that the printing apparatus further comprising:
display means for displaying a message regarding possible choices of holding or erasing the image data stored in the buffer memory means before an emulation change ;
second key means for selecting holding of the image data stored in the buffer memory means when the printer emulation is changed;
third key means for selecting erasure of the image data stored in the buffer memory means;
holding means for holding the image data stored in the buffer memory means in response to the second key means when the printer emulation is changed by the changing means; and
erasing means for erasing the image data stored in the buffer memory means in response to the third key means when the printer emulation is changed.

### BRIEF DESCRIPTION OF THE INVENTION

A more complete appreciation of the present invention and many of the attendant advantages thereof will be readily obtained as the invention becomes better understood by reference to the following detailed description, when considered in connection with the accompanying drawings, wherein:
FIGURE 1 is a perspective view of an image forming apparatus according to the present invention;
FIGURE 2 is a plan view showing an operation panel of the image forming apparatus shown in FIGURE 1;
FIGURE 3 is a sectional view of the image forming apparatus shown in FIGURE 1;
FIGURE 4 is a block diagram showing an arrangement of a printer controller of the image forming apparatus shown in FIGURE 2;
FIGURE 5 shows a table stored in ROM of the printer controoler shown in FIGURE 4; and
FIGURE 6 is a flow chart showing an operation of the image forming apparatus shown in FIGURE 1.

### DETAILED DESCRIPTION OF THE PREFERRED EMBODIMENTS

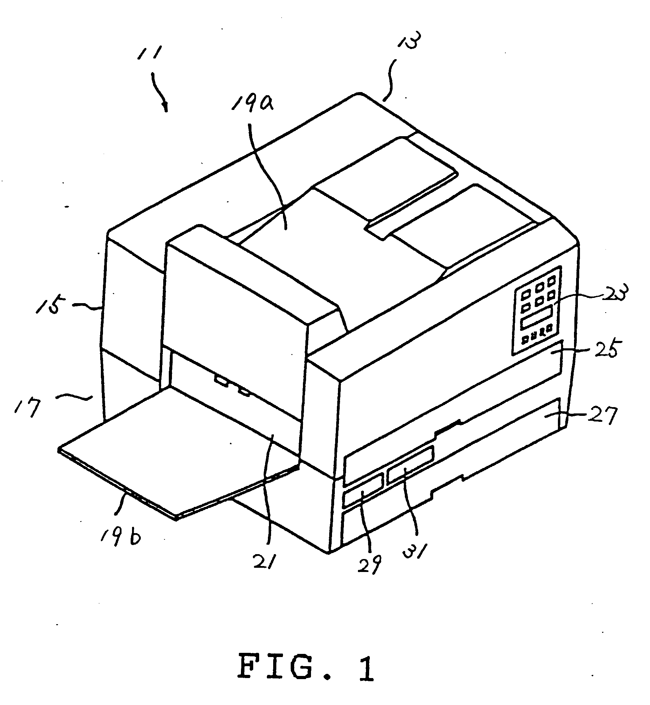

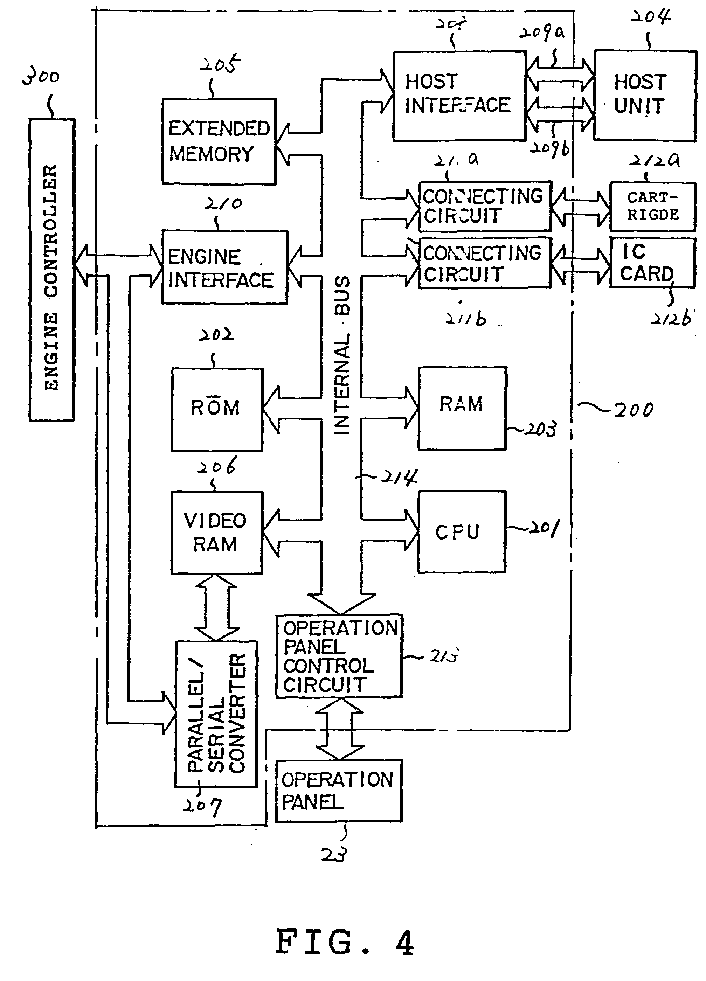

FIGURE 1 shows an image forming apparatus according to the present invention. The image forming apparatus may be, of course, one of a wide variety known in the prior art. For purpose of example, however, the image forming apparatus depicted is a laser printer. Laser printer 11 may serve as an output device for a host unit 204 as shown in FIGURE 4, for example, a personal computer or an image reading apparatus. In response to a print command from host unit 204, laser printer 11 performs an image forming operation to form an image on a paper sheet according to data supplied from host unit 204. The paper sheet is fed to a user via trays 19a, 19b.

Laser printer 11 includes a body 13 having an upper cover 15 and a lower frame 17. Upper cover 15 covers a part of the upper portion of body 13. Upper cover 15 is mounted by a hinge to body 13 and may be opened away from frame 17.

A first output tray 19a is located on the upper portion of body 13 to receives printed paper sheets output from laser printer 11. A recess 21 used as paper sheet discharge section is formed on the front surface of body 13. A second output tray 19b is located on the bottom edge portion of recess 21, so that second output tray 19b may receive printed paper sheets through recess 21. An operation panel 23 is located on a surface portion of body 13.

First and second paper supply cassettes 25 and 27 are inserted into a lower portion of body 13. For purpose of reference, the side of printer 11 into which cassettes 25 and 27 are inserted will hereinafter be reffered to as the front side of printer 11. Cassettes 25 and 27 hold a supply of paper sheet P.

Connectors 29 and 31 are also located on a surface portion of body 13. A programming cartridge, for example, an emulation cartridge, a IC card or the like (not shown) may be plugged into connectors 29 and 31 for programming special printer functions.

Operation panel 23 includes a plurality of visual displays, for example, light emitting diodes and a status indicator for indicating the operating status of printer 11.

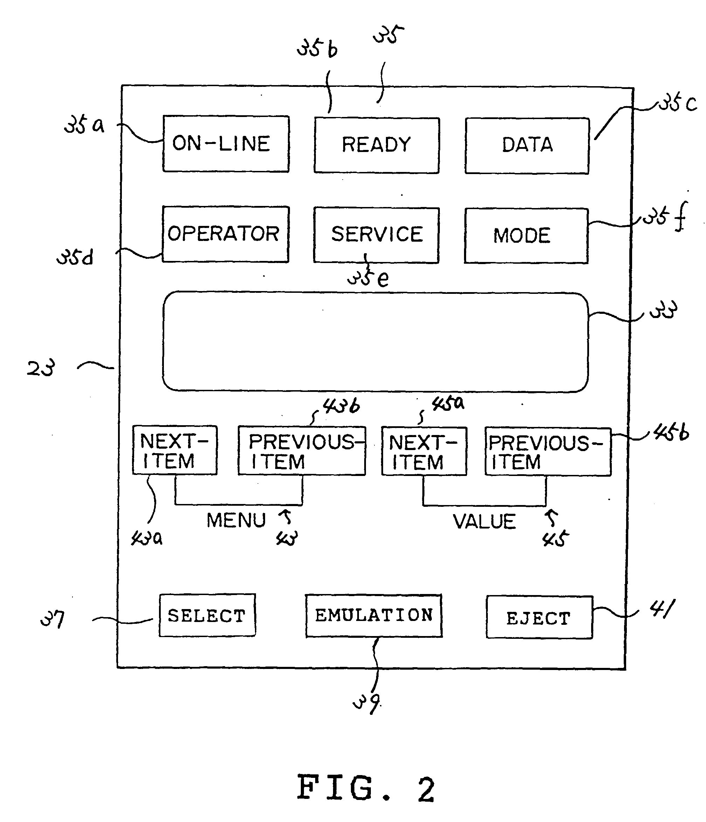

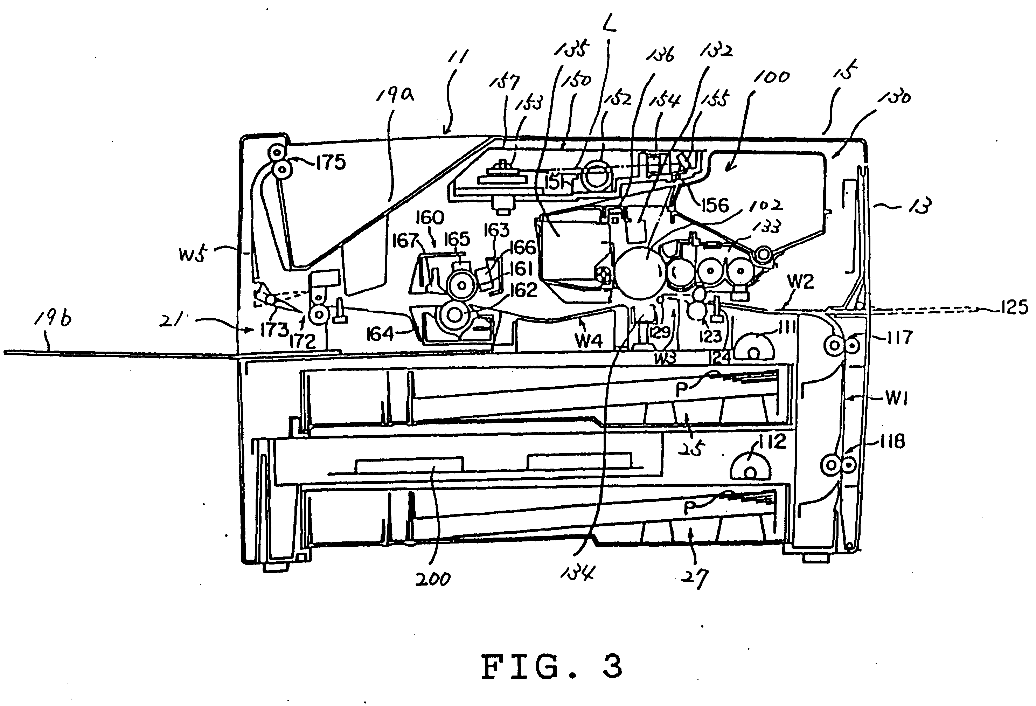

Referring to FIGURE 2, operation panel 23 includes a liquid crystal display element 33 and a LED display unit 35. Liquid crystal display element 33 displays the number of paper sheets P, a selected operation mode, message information and so on. LED display unit 35 displays various states in light fashion. LED display unit 35 has an ON-LINE display portion 35a, a READY display portion 35b, a DATA display portion 35c, an OPERATOR display portion 35d, a SERVICE display portion 35e, and a MODE display portion 35f. ON-LINE display portion 35a indicates that laser printer 11 is on-line. READY display portion 35b indicates that the power is on and laser printer 11 is ready to print. DATA display portion 35c comes on while laser printer 11 is receiving printable data. OPERATOR display portion 35d comes on when something is wrong. SERVICE display portion 35e comes on when printer 11 requires service by a trained technician. Also, MODE display portion 35f indicates that printer 11 expects the operator to manually insert single paper sheets using a manual feeding tray 125 as shown in FIGURE 3.

Operation panel 23 also includes a SELECT key 37, an EMULATION key 39 and an EJECT key 41. SELECT key 37 causes laser printer 11 to activate or deactivate communication with host unit 204. EMULATION key 39 lets an operator change the printer emulation of laser printer 11. Eject key 41 causes printer 11 to print and eject the currently stored data in a buffer memory (RAM) 203 as shown in FIGURE 4. Also, eject key 41 is used for erasing data stored in buffer memory 203 when the printer emulation of laser printer 11 is changed.

Operation panel 23 further has a MENU key portion 43 and a VALUE key portion 45. MENU key portion 43 and VALUE key portion 45 let the operator select various operation modes. The operator views and sets an operation mode by using MENU key portion 43 and VALUE key portion 45. These operation modes include pitch, font, margins, type of printer emulation, number of copies and so on. Each of the operation modes has two or more values the operator can set. Thus, the operator selects the operation mode by using MENU key portion 43 and sets its value by using VALUE key portion 45. MENU key portion 43 has a menu next-item key 43a and a menu previous-item key 43b. Also, VALUE key portion 45 has a value next-item key 45a and a value previous-item key 45b. For example, a plurality of menu information for representing the operation modes are stepped forward through an operation mode list (not shown) by pressing menu next-item key 43a and are stepped backward through the operation mode list by pressing menu previous-item key 43b. Also, the selected menu information is displayed on a left half of liquid crystal display element 33 and these display operations are repeated in cyclic fashion. Moreover, a plurality of value information corresponding to the selected menu information are stepped forward by pressing value next-item key 45a and are stepped backward by pressing value previous-item key 45b. The selected value information is displayed on a right half of liquid crystal display element 33. By operating menu next-item key 43a, menu previous-item key 43b, value next-item key 45a and value previous-item key 45b, the operator selects a desired operation mode and the values associated with the selected operation mode.

Referring now to FIGURE 3, the internal construction of laser printer 11 will be described.

An image forming unit 100 includes an image bearing member 102, i.e., a photosensitive drum for forming a latent image in response to a light. Image bearing member 102 is rotated by an electric motor (not shown). A laser unit 150 radiates a laser beam L so that a latent image is formed on the surface of image bearing member 102.

Laser unit 150 includes a semiconductor laser 151 for generating laser beam L in response to data supplied from host unit 204. Laser beam L is directed to a polygonal mirror 153 via a condenser lens 152. Polygonal mirror 153 reflects laser beam L so that laser beam L scans the surface of image bearing member 102 through first and second lenses 154 and 155 and a third lens 156. Laser unit 150 is mounted in a casing 157 which may be made of synthetic resin.

A developing unit 133 is located adjacent image bearing member 102. Developing unit 133 develops the latent image with a toner in order to form a visible image.

A transfer unit 134 is located down stream of developing unit 133 along the rotational direction of image bearing member 102. At the image transfer position, transfer unit 134 faces image bearing member 102. Transfer unit 134 transfers the toner image onto paper sheet P supplied from cassettes 25 and 27.

A cleaning unit 135 is located down stream of transfer unit 134 along the rotational direction of image bearing member 102. Cleaning unit 135 cleans the surface of image bearing member 102 so as to remove the residual toner after transfer of the toner image by transfer unit 134.

A discharging unit 136 and a charging unit 132 are located down stream of laser unit 150 along the rotational direction of image bearing member 102. Discharging unit 136 includes a lamp (not shown) for radiating the surface of image bearing member 102 in order to set the electrical potential of the surface of image bearing member 102 to a predetermined uniform level. After the electrical potential of the surface of image bearing member 102 is set, charging unit 132 charges the entire surface of image bearing member 102 in order to prepare the surface for forming a latent image.

Image bearing member 102, developing unit 133, cleaning unit 135, discharging unit 136 and charging unit 132 are mounted in a processing unit 130 as a single body. Processing unit 130 is detachably mounted into body 13.

A printer controller 200 for controlling the image froming operation of laser printer 11 is provided between first cassette 25 and second cassette 27.

Pickup rollers 111 and 112 are respectively provided at the top ends of cassettes 25 or 27 when cassettes 31 and 32 are inserted into body 13 of laser printer 11. Pickup rollers 111 and 112 have a semicircular cross-section and are provided with flat surfaces. Paper sheet P, when picked up from cassettes 25 or 27, is then transported to an image transfer position through a first feeding path W1, a second feeding path W2 and a third feeding path W3. First feeding path W1 is arranged near to cassettes 25 and 27. First feeding path W1 comprises two pairs of conveying rollers 117 and 118. Second feeding path W2 for feeding paper sheet P towards the image transfer position is arranged downstream of first feeding path W1. Second feeding path W2 comprises a pair of aligning rollers 123. Aligning switch 124 for detecting the passage of paper sheet P is arranged upstream of aligning rollers 123. Third feeding path W3 is located downstream of aligning rollers 123 for guiding paper sheet P to the image transfer position. Third feeding path W3 includes a transfer guide roller 129.

Laser printer 11 may also include a manual feeding tray 125 inserted into the left side of body 13 and shown by dashed lines in FIGURE 3. Manual feeding tray 125 is used as a guide for manually feeding individual paper sheets for printing.

A fixing unit 160 is located down stream of the image transfer position. Fixing unit 160 fixes the toner image onto paper sheet P by heating and pressing paper sheet P with the toner image. Fixing unit 160 comprises a heating roller 161 and a pressing roller 162 for pressing against heating roller 161. Heating roller 161 and pressing roller 162 are enclosed by an upper casing 163 and a lower casing 164 to maintain the proper temperature for fixing the toner image on paper sheet P. A cleaner 165 for cleaning the surface of heating roller 161, a thermistor 166 for detecting the surface temperature of heating roller 161 and a separation guide 167 for ensuring reliable separation of paper sheet P from heating roller 161 are respectively arranged around the heating roller 161.

A fourth path W4 is located between the image transfer position and fixing unit 160. Paper sheet P from image transfer position is transported to fixing unit 160 along fourth path W4.

An eject path W5 is located down stream of fixing unit 160. Eject path W5 ejects paper sheet P with the fixed toner image onto receiving tray 19a or 19b. Eject path W5 comprises first pair of paper eject rollers 172, gate 173 and second pair of paper eject rollers 175. Gate 173 selects the eject position of paper sheet P with the fixed toner image. Thereby, paper sheet P is transported from cassettes 25, 27 or manual feeding tray 125 to output trays 19a or 19b.

FIGURE 4 shows an arrangement of a main part of printer controller 200.

Referring to FIGURE 4, printer controller 200 includes a CPU 201 for performing an overall control of laser printer 11, and a memory (ROM) 202 for storing a control program with respect to the printing operation, the printer emulation and so on. CPU 201 is operated in accordance with the control program stored in ROM 202. Buffer memory (RAM) 203 temporarily stores image data supplied from host unit 204. An extended memory 205 stores image data when one-page data may not be stored in RAM 203. A video RAM 206 stores bit map data corresponding to image data supplied from host unit 204. The bit map data output from video RAM 206 is supplied to a parallel/serial converter 207.
Parallel/serial converter 207 converts the supplied bit map data into serial data, and then the serial data is supplied from parallel/serial converter 207 to an engine controller 300 which controls the image forming operation of laser printer 11.

A host interface 208 interfaces data exchange between host unit 204 and printer controller 200. Host interface 208 includes a serial transfer line 209a and a parallel transfer line 209b. Transfer lines 209a and 209b may be selectively used in accordance with the type of data transferred from host unit 204. An engine interface 210 interfaces exchange of an interface signal between printer controller 200 and engine controller 300. Connecting circuits 211a and 211b disconnect power sources (not shown) and signal lines (not shown) from a cartridge 212a and an IC card 212b so that the programming stored in cartridge and data stored in IC card 212b may is not destroyed by noise when cartridge 212a and IC card 212b respectively are inserted into or removed from connectors 29 and 31.

An operation panel control circuit 213 controls the liquid crystal display element 33 of operation panel 23 and so on. An internal bus 214 allows data exchange between CPU 201, ROM 202, RAM 203, extended memory 205, video RAM 206, host interface 208, engine interface 210, connecting circuits 211a and 211b and operation panel control circuit 213.

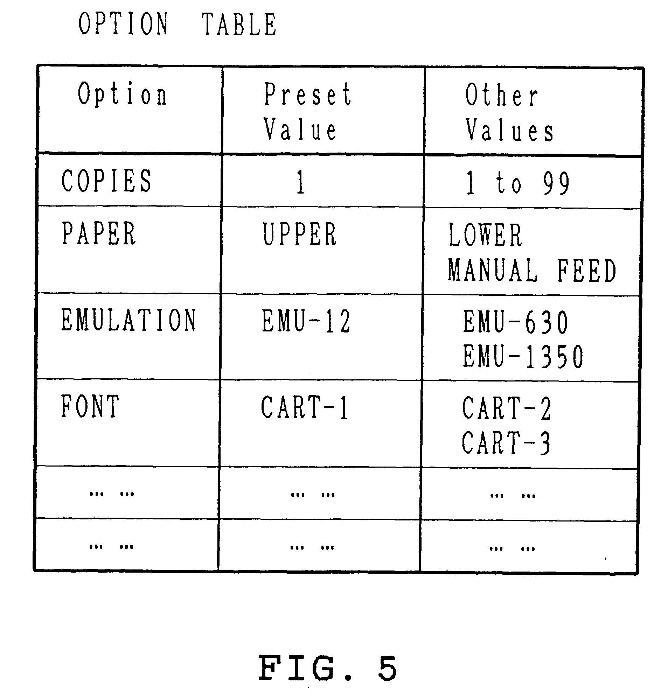

In the present embodiment, ROM 202 also stores a table which summarizes the operation modes in the order that they appear in LCD element 33 as shown in FIGURE 5. In this table, the left column identifies the name of the operation mode. The middle column identifies the factory preset values for each operation modes and the right column identifies the other values. For example, with respect to EMULATION, this function selects the printer emulation and the operator may select one of EMU-12, EMU-630 and EMU-1350 with respect to the printer emulation (where EMU-12, EMU-630 and EMU-1350 respectively represent the name of the printer emulation).

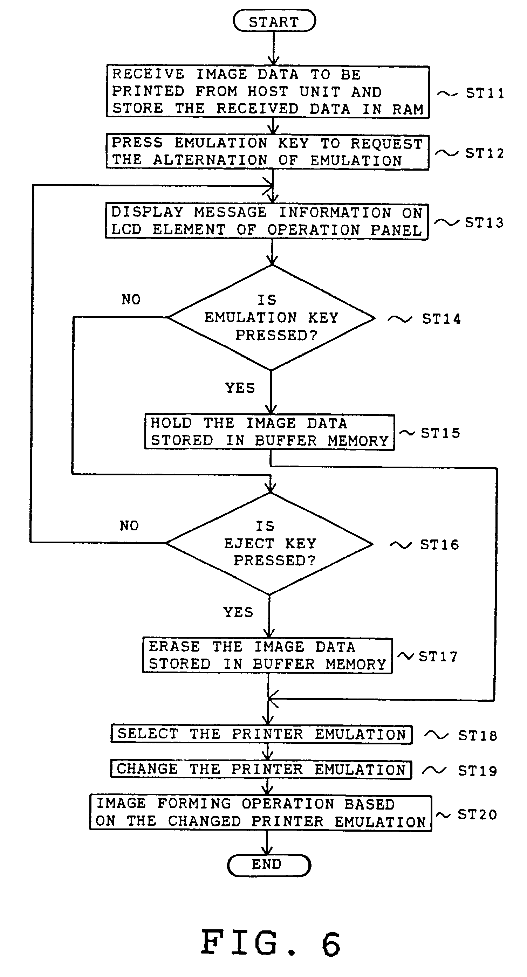

Next, the changing operation of the printer emulation of laser printer 11 will be described with reference to FIGURE 6.

The printer emulation of laser printer 11 is changed to an other emulation when the operator designates the desired emulation by value keys 45a and 45b of operation panel 23 or puts the emulation cartridge in connector 29 of laser printer 11. When the operator designates the desired emulation by value keys 45a and 45b, the printer emulation may change to any other emulation included in the table stored in ROM 202 as shown in FIGURE 5. In order to hold or erase the image data stored in RAM 203 when the printer emulation is changed, laser printer 11 may perform the following operation.

When printer controller 200 receives image data to be printed from host unit 204, the image data is stored in RAM 203 (step ST11). When the image data is stored in RAM 203, the operator presses EMULATION key 39 of operation panel 23 in order to request the alternation of the printer emulation of laser printer 11 (step ST 12), CPU 201 receives this request through operation panel control circuit 213. When CPU 201 receives the emulation alternation request, CPU causes LCD element 33 of operation panel 23 to display message information representing whether the operator wants to hold the image data stored in RAM 203 (step ST 13). For example, the message information is sequentially displayed on LCD element 33 in such a manner as "THE DATA IS STORED. PLEASE PRESS THE EJECT KEY IF YOU WANT TO ERASE THE DATA. PLEASE PRESS THE EMULATION KEY IF YOU WANT TO HOLD THE DATA.". Thus, in the present embodiment, if the operator wants to print the image data stored in RAM 203 after the printer emulation is changed, the operator presses EMULATION key 39 so as to hold the image data (step ST 14). Also, when the operator does not need the image data stored in RAM 203, the operator presses EJECT key 41 in order to erase the image data from RAM 203 (step ST16). When the operator presses EMULATION key 39, operation panel control circuit 213 supplies a first request signal for holding the image data to CPU 201, and then CPU 201 performs the operation to hold the image data stored in RAM 203 in response to the first request signal (step ST15). Also, when the operator presses EJECT key 41, operation panel control circuit 213 supplies a second request signal for erasing the image data to CPU 201, and then CPU 201 performs the operation to erase the image data stored in RAM 203 in response to the second request signal (step ST17).

In this state, the operator selects the desired printer emulation within the emulations included in the table as shown in FIGURE 5 by value next-item key 45a and value previous-item key 45b or the operator may change the printer emulation by putting the emulation cartridge in connector 29 of laser printer 11 (step ST 18). CPU 201 changes the printer emulation of laser printer 11 in accordance with the selected emulation (step ST 19). Then, laser printer 11 performs the image forming operation based on the selected printer emulation (step ST 20). Thus, the operator may easily hold the image data stored in buffer memory 203 when the emulation is changed. Therefore, even if the operator wants to print the image data stored in buffer memory 203 before the emulation is changed, it is not necessary to receive the same image data from host unit 204 after the emulation is changed. Also, the operator may easily erase the image data stored in buffer memory 203 when the operator does not need the stored image data after the emulation is changed.

Thereby, in the present invention, the image forming apparatus of the present invention may print image data stored in the image forming apparatus efficiently when the emulation of the image forming apparatus is changed.

## Claims

1. A printing apparatus having an image bearing member and connected to a host unit for printing an image on the image bearing member according to image data supplied from the host unit, the printing apparatus having selectable printer emulation to thereby emulate other printers, the printing apparatus comprising:
buffer memory means (203) for temporarily storing the image data supplied from the host unit; and
first key means (39, 45) for selecting an alternative printer emulation;
characterised in that the printing apparatus further comprising:
display means (33) for displaying a message regarding possible choices of holding or erasing the image data stored in the buffer memory means (203) before an emulation change;
second key means (39) for selecting holding of the image data stored in the buffer memory means (203) when the printer emulation is changed;
third key means (41) for selecting erasure of the image data stored in the buffer memory means (203) ;
holding means (201), 202) for holding the image data stored in the buffer memory means (203) in response to the second key means (39) when the printer emulation is changed by the changing means (201, 202); and
erasing means (201, 202) for erasing the image data stored in the buffer memory means (203) in response to the third key means (41) when the printer emulation is changed.

2. A printing apparatus according to claim 1 further comprising control panel means (23) for designating a plurality of operation modes, the first key means (39), the second key means (39), the third key means (41) and the display means (33) being mounted on the control panel.

3. A printing apparatus according to claim 1 or claim 2, further comprising connecting means (211a) for connecting a program cartridge defining one or more alternative printer emulations.

## Patentansprüche

1. Druckvorrichtung, die ein Bildträgerbauteil aufweist und mit einem Host-Rechner verbunden ist, um auf dem Bildträgerbauteil ein Bild zu erzeugen, das Bilddaten entspricht, die von dem Host-Rechner geliefert werden, wobei die Druckvorrichtung eine auswählbare Druckeremulation enthält, um dadurch andere Drucker zu emulieren, und wobei die Druckvorrichtung aufweist:
eine Pufferspeichereinrichtung (203), um die von dem Host-Rechner gelieferten Bilddaten zeitweise zu speichern; und
eine erste Tasteneinrichtung (39, 45), um eine andere Druckeremulation auszuwählen;
dadurch gekennzeichnet, daß die Druckvorrichtung außerdem aufweist:
eine Anzeigeeinrichtung (33) zum Anzeigen einer Information bezüglich vorhandener Auswahlmöglichkeiten betreffend das Halten oder Löschen der in der Pufferspeichereinrichtung (203) gespeicherten Bilddaten vor einer Änderung der Emulation;
eine zweite Tasteneinrichtung (39), um das Halten der in der Pufferspeichereinrichtung (203) gespeicherten Bilddaten auszuwählen, wenn die Druckeremulation geändert wird;
eine dritte Tasteneinrichtung (41), um das Löschen der in der Pufferspeichereinrichtung (203) gespeicherten Bilddaten auszuwählen;
eine Halteeinrichtung (201, 202), um die in der Pufferspeichereinrichtung (203) gespeicherten Bilddaten in Reaktion auf die zweite Tasteneinrichtung (39) zu halten, wenn die Druckeremulation durch die Änderungseinrichtung (201, 202) geändert wird; und
eine Löscheinrichtung (201, 202), um die in der Pufferspeichereinrichtung (203) gespeicherten Bilddaten in Reaktion auf die dritte Tasteneinrichtung (41) zu löschen, wenn die Druckeremulation geändert wird.

2. Druckvorrichtung nach Anspruch 1, außerdem mit einer Bedienfeldeinrichtung (23), um eine Anzahl von Betriebsarten zu bestimmen, wobei die erste Tasteneinrichtung (39), die zweite Tasteneinrichtung (39), die dritte Tasteneinrichtung (41) und die Anzeigeeinrichtung (33) an dem Bedienfeld vorgesehen sind.

3. Druckvorrichtung nach Anspruch 1 oder Anspruch 2, außerdem mit einer Verbindungseinrichtung (211a), um eine Programm-Karte anzuschließen, mittels derer eine oder mehrere alternative Druckeremulationen definiert sind.

## Revendications

1. Appareil d'impression comportant un organe porteur d'image et connecté à une unité hôte pour imprimer une image sur l'organe porteur d'image, conformément à des données d'image délivrées par l'unité hôte, l'appareil d'impression comportant une émulation d'imprimante pouvant être choisie, pour émuler ainsi d'autres imprimantes, l'appareil d'impression comprenant :
des moyens de mémoire tampon (203) pour stocker temporairement les données d'image délivrées par l'unité hôte ; et
des premiers moyens de touche (39, 45) pour choisir une autre émulation d'imprimante ;
caractérisé en ce que l'appareil d'impression comprend en outre :
des moyens d'affichage (33) pour afficher un message concernant des choix possibles de conservation ou d'effacement des données d'image stockées dans les moyens de mémoire tampon (203) avant un changement d'émulation ;
des deuxièmes moyens de touche (39) pour choisir la conservation des données d'image stockées dans les moyens de mémoire tampon (203) lorsque l'émulation d'imprimante est modifiée ;
des troisièmes moyens de touche (41) pour choisir l'effacement des données d'image stockées dans les moyens de mémoire tampon (203) ;
des moyens de conservation (201, 202) pour conserver les données d'image stockées dans les moyens de mémoire tampon (203) en réponse aux deuxièmes moyens de touche (39) lorsque l'émulation d'imprimante est modifiée par les moyens de changement (201, 202) ; et
des moyens d'effacement (201, 202) pour effacer les données d'image stockées dans les moyens de mémoire tampon (203) en réponse aux troisièmes moyens de touche (41) lorsque l'émulation d'imprimante est modifiée.

2. Appareil d'impression selon la revendication 1, comprenant en outre des moyens de tableau de commande (23) pour désigner une pluralité de modes de fonctionnement, les premiers moyens de touche (39), les deuxièmes moyens de touche (39), les troisièmes moyens de touche (41) et les moyens d'affichage (33) étant montés sur le tableau de commande.

3. Appareil d'impression selon la revendication 1 ou la revendication 2, comprenant en outre des moyens de connexion (211a) pour connecter une cartouche de programme définissant une ou plusieurs autres émulations d'imprimante.
